(19) Europäisches Patentamt
European Patent Office
Office européen des brevets

(11) Veröffentlichungsnummer: 0 142 782
A2

(12) # EUROPÄISCHE PATENTANMELDUNG

(21) Anmeldenummer: 84113480.2

(22) Anmeldetag: 08.11.84

(51) Int. Cl.[4]: C 07 F 9/165
C 07 F 9/24, C 07 F 9/40
A 01 N 57/06

(30) Priorität: 18.11.83 DE 3341669

(43) Veröffentlichungstag der Anmeldung: 29.05.85 Patentblatt 85/22

(84) Benannte Vertragsstaaten: AT BE CH DE FR GB IT LI NL SE

(71) Anmelder: HOECHST AKTIENGESELLSCHAFT
Postfach 80 03 20
D-6230 Frankfurt am Main 80(DE)

(72) Erfinder: Salbeck, Gerhard, Dr.
Frankfurter Strasse 34
D-6238 Hofheim am Taunus(DE)

(72) Erfinder: Kratt, Günter, Dr.
Amselweg 9
D-6238 Hofheim am Taunus(DE)

(72) Erfinder: Burghardt, Gerhard, Dr.
Paulinenweg 23
D-6238 Hofheim am Taunus(DE)

(72) Erfinder: Knauf, Werner, Dr.
Im Kirschgarten 24
D-6239 Eppstein/Taunus(DE)

(72) Erfinder: Waltersdorfer, Anna, Dr.
Rauenthaler Weg 28
D-6000 Frankfurt am Main 71(DE)

(54) Neue (Di)thiophosphor- und phosphonsäure-Derivate und ihre Verwendung im Pflanzenschutz.

(57) Die neuen Verbindungen der Formel I, worin

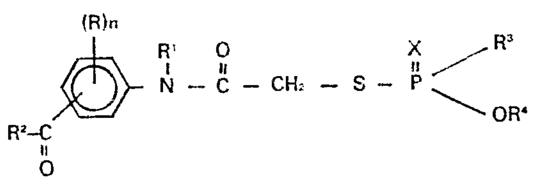

(I)

R = Halogen, $NO_2$, Alkyl, $R^1$ = Alkyl, wobei in Position C–1 des Alkylrestes ein Alkoxycarbonylrest stehen kann, oder Phenyl, $R^2$ = Alkyl, Alkoxy, Alkylthio, Phenyl, Amino Monoalkylamino oder Dialkylamino, $R^3$ = Alkyl, Alkoxy, Alkylthio, Mono- oder Dialkylamino, $R^4$ = Alkyl, X = O, S und n = 0 oder 1 bedeuten, wobei R nicht orthoständig zur Gruppe $-NR^1-$ stehen darf, besitzen vorteilhafte insektizide, akarizide und nematozide Eigenschaften.

EP 0 142 782 A2

Neue (Di)thiophosphor- und phosphonsäure-Derivate und ihre Verwendung im Pflanzenschutz

Der Einsatz von Thiophosphor- und phosphonsäure-Derivaten als Pflanzenschutzmittel ist in der Literatur bekannt, so beispielsweise die Verwendung als Fungizide gemäß DE-OS 26 04 225, die Verwendung als Insektizide, Akarizide, Nematizide und Herbizide gemäß Belgischer Patentschrift Nr. 851 126 und die Verwendung als Insektizide und Akarizide gemäß Britischer Patentschrift Nr. 2 004 187.

Es wurden nun neue (Di)thiophosphor- und phosphonsäure-Derivate gefunden, die sich vorteilhaft zum Einsatz im Pflanzenschutz eignen. So weisen diese insbesondere eine hohe Pflanzenverträglichkeit auf.

Gegenstand der vorliegenden Erfindung sind daher die neuen Verbindungen der Formel I, worin

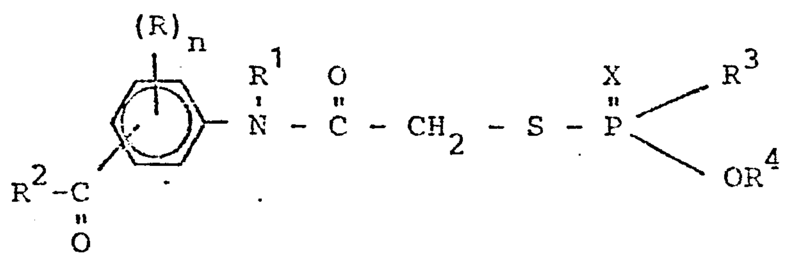

(I)

R = Halogen, $NO_2$, $(C_1-C_4)$-Alkyl,

R1 = $(C_1-C_4)$-Alkyl, wobei in Position C-1 des Alkylrestes ein $(C_1-C_4)$-Alkoxycarbonylrest stehen kann, oder Phenyl,

R2 = $(C_1-C_4)$-Alkyl, $(C_1-C_4)$-Alkoxy, $(C_1-C_4)$-Alkylthio, Phenyl, Amino, Mono-$(C_1-C_6)$-alkylamino oder Di-$(C_1-C_6)$-alkylamino

R3 = $(C_1-C_4)$-Alkyl, $(C_1-C_4)$-Alkoxy, $(C_1-C_4)$-Alkylthio, Mono-$(C_1-C_4)$-alkylamino oder Di-$(C_1-D_4)$-alkylamino

R4 = $(C_1-C_4)$-Alkyl

X = O, S und

n = 0 oder 1

bedeuten, wobei R nicht orthoständig zur Gruppe $-NR^1-$ stehen darf.

Bevorzugt hiervon sind Verbindungen der Formel I, worin $R^1$ = $(C_1-C_2)$-Alkyl, $R^2$ = $(C_1-C_2)$-Alkyl oder $(C_1-C_2)$-Alkoxy, $R^3$ = Mono- oder Di-$(C_1-C_4)$-alkylamino, $R^4$ = $(C_1-C_2)$-Alkyl, X = O und n = O bedeuten, und die Gruppe $R^2$-CO sich in ortho-Position des Phenylrings befindet.

Gegenstand der vorliegenden Erfindung sind auch Verfahren zur Herstellung der Verbindungen der Formel I, dadurch gekennzeichnet, daß man Verbindungen der Formel II

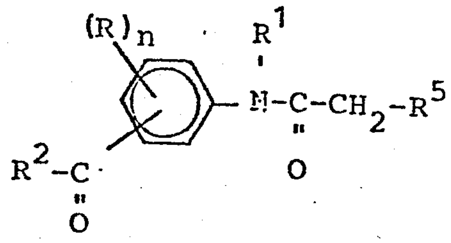

(II)

mit Phosphorverbindungen der Formel III,

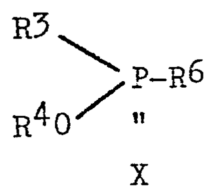

III

wobei bei den Formeln II und III jeweils einer der Reste R5 und R6 Halogen, insbesondere Chlor oder Brom, und der andere die Gruppe -SY bedeutet, worin Y Wasserstoff oder ein Kation darstellt, gegebenenfalls in Gegenwart eines säurebindenden Mittels umsetzt.
Als Kation kommt für Y insbesondere ein Metallkation, vorzugsweise ein Alkalimetallkation wie $Na^+$, $K^+$, oder ein gegebenenfalls substituiertes Ammoniumion infrage.

Wenn R6 in Formel III die Gruppe -SY bedeutet, reagieren die entsprechenden Phosphorverbindungen der Formel III mit den Chloracetaniliden der Formel II (R5 = Halogen) bei

Temperaturen zwischen 0° und +120°C, vorzugsweise zwischen +10° bis +80°C.

Das Verfahren wird zweckmäßigerweise in Gegenwart eines gegenüber den Reaktionsteilnehmern inerten Lösungsmittels durchgeführt. In Betracht kommen vorzugsweise niedere aliphatische Ketone wie Aceton oder Methylethylketon, Alkanole wie Methanol, Ethanol oder Isopropanol, Ester wie Essigsäureethylester, Nitrile, N-alkylierte Säureamide wie Dimethylformamid, Ether wie Dioxan, Glykoldimethylether oder Tetrahydrofuran, chlorierte Kohlenwasserstoffe wie Chloroform oder Tetrachlorkohlenstoff und Wasser sowie Gemische solcher Lösungsmittel.

Im Falle Y = Wasserstoff setzt man dem Reaktionsgemisch säurebindende Mittel zu. Als solche kommen bevorzugt Alkalimetallhydroxide und -carbonate zur Anwendung; es können aber auch tertiäre Stickstoffbasen wie Pyridin oder Triethylamin verwendet werden.

Die Halogenessigsäureanilide der Formel II mit R5 = Halogen und ihre Herstellung sind in der Literatur beschrieben oder können nach literaturbekannten Methoden dargestellt werden. Die Verbindungen der Formel III mit $R^6$ = SY sind bekannt und nach üblichen Methoden leicht zugänglich.

Wenn R6 in Formel III Halogen und R5 in Formel II die Gruppe -SY bedeutet, werden in der Regel etwa stöchiometrische Mengen der Reaktionspartner eingesetzt; jedoch kann ein Überschuß der Verbindung der Formel III von 5 - 10 % vorteilhaft sein.

Die Reaktion wird vorzugsweise in Gegenwart eines unter den Reaktionsbedingungen inerten Lösungsmittels durchgeführt. Als solche sind insbesondere die obengenannten Lösungsmittel verwendbar. Die Reaktionstemperaturen

können innerhalb von 0 bis 150°C variiert werden, vorzugsweise arbeitet man zwischen +50°C und +120°C.

Wenn Y der Gruppe -SY von Formel II Wasserstoff bedeutet, werden die obengenannten säurebindenden Mittel zugegeben.

Die Thioglykolsäureanilide der Formel II (R6 = SY) lassen sich nach literaturbekannten Methoden herstellen. Die Halogenphosphorverbindungen der Formel III (R5 = Halogen) sind bekannt und nach üblichen Methoden leicht zugänglich.

Die erfindungsgemäßen Verbindungen der Formel I besitzen insektizide, akarizide und nematizide Eigenschaften.

Als Insektizide und Akarizide werden die beanspruchten Verbindungen der Formel I sowohl durch Kontakt als auch durch Fraß wirksam und eignen sich somit zur Vernichtung zahlreicher Schädlinge einschließlich ihrer Entwicklungsstadien an den verschiedensten Kulturpflanzen bei guter Pflanzenverträglichkeit. So können verschiedene Spinnmilbenarten, wie die Obstbaumspinnmilbe (Metatetranychus ulmi), die Citrusspinnmilbe (Panonychus citri) und die Bohnenspinnmilbe (Tetranychus urticae), darunter auch Phosphorsäureester-resistente Stämme, gut bekämpft werden.

Viele für Kulturpflanzen schädliche Insekten mit saugenden und beißenden Mundwerkzeugen lassen sich mit den erfindungsgemäßen Verbindungen vernichten. Genannt seien Käfer wie der Mexikanische Bohnenkäfer (Epilachna varivestis), Kartoffelkäfer (Leptinotarsa decemlineata), Zottige Blütenkäfer (Epicometis hirta), Erdfloh-Käfer (Phyllotreta spp.), Erdbeerstengelstecher (Coenorrhinus germanicus) und Baumwollkapselkäfer (Anthonomus grandis), Schmetterlinge und deren Larven wie der Ägyptische und

der altweltliche Baumwollkapselwurm (Earias insulana bzw. Heliothis armigera), Wickler, insbesondere Apfelwickler (Carpocapsa pomonella), Eichenwickler (Tortrix viridana), Fruchtschalenwickler (Adoxophyes reticulana), Maiszünsler (Ostrinia nubilalis) und Frostspanner (Operophthera brumata), Blattläuse, wie die Schwarze Bohnenlaus (Doralis fabae), Grüne Pfirsichlaus (Myzodes persicae) und Baumwollblattlaus (Aphis gossypii), und Wanzen, z.B. Baumwollwanzen (Oncopeltus fasciatus und Dysderus spp., insbesondere fasciatus). Außerdem werden Schildzecken an Haustieren bekämpft, wie z.B. Hyalomma marginatum, Rhipicephalus evertsi, Amblyomma hebraeum und Boophilus microplus.

Weiterhin haben die Verbindungen eine ausgezeichnete Wirkung gegen pflanzenschädigende Nematoden, beispielsweise solche der Gattungen Meloidogyne, Heterodera, Ditylenchus, Aphelenchoides, Radopholus, Globodera, Pratylenchus, Longidorus und Xiphinema.

Zur Anwendung werden die Verbindungen der Formel I unter Zugabe geeigneter Hilfsstoffe formuliert.

Gegenstand der Erfindung sind daher auch insektizide, akarizide und nematizide Mittel, die eine wirksame Menge einer Verbindung der Formel I enthalten.

Die erfindungsgemäßen Mittel enthalten die Wirkstoffe der Formel I im allgemeinen zu 2 - 80 Gew.-%. Sie können als Spritzpulver, emulgierbare Konzentrate, versprühbare Lösungen, Stäubemittel oder Granulate in den üblichen Zubereitungen angewendet werden.

Spritzpulver sind in Wasser gleichmäßig dispergierbare Präparate, die neben dem Wirkstoff außer einem Verdünnungs- oder Inertstoff noch Netzmittel, z.B. polyoxethylierte Alkylphenole, polyoxethylierte Fettalkohole, Alkyl- oder Alkylphenyl-sulfonate und Dispergiermittel, z.B. ligninsulfonsaures Natrium, 2,2'-dinaphthylmethan-6,6'-disulfonsaures Natrium, dibutyl-naphthalinsulfonsaures Natrium oder auch oleylmethyltaurinsaures Natrium enthalten.

Emulgierbare Konzentrate werden durch Auflösen des Wirkstoffes in einem organischen Lösungsmittel, z.B. Butanol, Cyclohexanon, Dimethylformamid, Xylol oder auch höhersiedende Aromaten oder Kohlenwasserstoffen unter Zusatz von einem oder mehreren Emulgatoren hergestellt. Als Emulgatoren können beispielsweise verwandt werden: Alkylarylsulfonsaure Calziumsalze wie Ca-dodecylbenzolsulfonat, oder nicht ionische Emulgatoren wie Fettsäurepolyglykolester, Alkylarylpolyglykolether, Fettalkoholpolyglykolether, Propylenoxid-Ethylenoxid-Kondensationsprodukte, Fettalkohol-Propylenoxid-Ethylenoxid-Kondensationsprodukte, Alkylpolyether, Sorbitan-fettsäureester, Polyoxethylen-sorbitan-fettsäureester oder Polyoxethylensorbitester.

Stäubemittel erhält man durch Vermahlen des Wirkstoffes mit fein verteilten, festen Stoffen, z.B. Talkum, natürlichen Tonen, wie Kaolin, Bentonit, Pyrophillit oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemittel, z.B. Polyvinylalkohol, polyacrylsaurem Natrium oder auch Mineralölen auf die Oberfläche von Trägerstoffen, wie Sand, Kaolinite, oder von granuliertem Inertmaterial. Auch können geeignete Wirkstoffe in der für die Herstellung von Düngemittelgranalien üblichen Weise - gewünschtenfalls in Mischung mit Düngemitteln - formuliert werden.

In Spritzpulvern variiert die Wirkstoffkonzentration z.B. zwischen etwa 10 % und 80 %, der Rest besteht aus den oben angegebenen Formulierungszusätzen. Bei emulgierbaren Konzentraten kann die Wirkstoffkonzentration gleichfalls etwa 10 % bis 80 % betragen. Staubförmige Formulierungen enthalten meistens 5 - 20 % an Wirkstoff, versprühbare Lösungen etwa 2 - 20 %. Bei Granulaten hängt der Wirkstoffgehalt zum Teil davon ab, ob die wirksame Verbindung flüssig oder fest vorliegt und welche Granulierhilfsmittel, Füllstoffe usw. verwendet werden.

Zur Anwendung werden die handelsüblichen Konzentrate gegebenenfalls in üblicher Weise verdünnt, z.B. bei Spritzpulvern und emulgierbaren Konzentraten mittels Wasser. Staubförmige und granulierte Zubereitungen sowie versprühbare Lösungen werden vor der Anwendung nicht mehr mit weiteren inerten Stoffen verdünnt. Die Aufwandmenge kann zwischen 0,2 kg/ha bis 20 kg/ha Wirkstoff variieren.

Zur Bekämpfung von Nematoden können die Wirkstoffe in Form von Stäuben, Granulaten oder wäßrigen Suspensionen auf den zu behandelnden Boden aufgebracht und anschließend durch Hacken oder Fräsen in den Boden eingearbeitet werden. Falls es sich um flüchtige Mittel handelt, kommt auch eine Bodenbewässerung in Betracht.

Die erfindungsgemäßen Wirkstoffe können mit anderen Insektiziden, Fungiziden, Nematoziden und Herbiziden kombiniert werden.

## FORMULIERUNGSBEISPIELE

### Beispiel A:

Ein in Wasser leicht dispergierbares benetzbares Pulver wird erhalten, indem man

| | |
|---|---|
| 25 Gew.-Teile | Wirkstoff, |
| 64 Gew.-Teile | kaolinhaltigen Quarz als Inertstoff, |
| 10 Gew.-Teile | ligninsulfonsaures Kalium und |
| 1 Gew.-Teil | oleylmethyltaurinsaures Natrium als Netz- und Dispergiermittel |

mischt und in einer Stiftmühle mahlt.

### Beispiel B:

Ein Stäubemittel, das sich zur Anwendung gut eignet, wird erhalten, indem man

| | |
|---|---|
| 10 Gew.-Teile | Wirkstoff |
| 90 Gew.-Teile | Talkum als Inertstoff |

mischt und in einer Schlagmühle zerkleinert.

### Beispiel C:

Ein emulgierbares Konzentrat besteht aus

| | |
|---|---|
| 15 Gew.-Teilen | Wirkstoff |
| 75 Gew.-Teilen | Cyclohexanon als Lösungsmittel und |
| 10 Gew.-Teilen | oxethyliertes Nonylphenol (10 AeO) als Emulgator. |

Beispiel D:

Ein Granulat besteht z.B. aus etwa

2 - 15 Gew.-Teilen Wirkstoff

und einem inerten Granulatträgermaterial wie z.B. Attapulgit, Bimsgranulat und/oder Quarzsand.

HERSTELLUNGSBEISPIELE

Allgemeine Vorschrift:

Zu einer Lösung oder Suspension von 0,10 - 0,11 Mol eines Ammoniumsalzes einer Phosphorverbindung der Formel III ($R^6$ = $SNH_4$) in 200 ml Glykoldimethylether gibt man bei Raumtemperatur unter Rühren 0,1 Mol eines Chloracetanilids der Formel II ($R^5$ = Cl). Man rührt ca. 3 - 5 Stunden bei 50°C, filtriert von ausgefallenen Salzen, verdünnt das Filtrat mit ca. 400 ml Benzol, wäscht die organische Phase gründlich mit Wasser und trocknet über Natriumsulfat. Nach dem Abdestillieren des Lösungsmittels hinterbleiben die Verfahrensprodukte als Öle, die zum Teil beim Anreiben kristallisieren.

Nach dem oben angegebenen Verfahren wurden die in der folgenden Tabelle aufgeführten Verbindungen der Formel I hergestellt.

Tabelle

| Bsp. | $(R)_n$ | $R^1$ | $R^2$-CO | $R^3$ | $R^4$ | X | $n_D$ bzw. Fp. |
|---|---|---|---|---|---|---|---|
| 1 | H | $CH_3$ | 4-$CH_3$-CO | $CH_3$ | $C_2H_5$ | S | $n_D^{24}$: 1,5902 |
| 2 | H | $CH_3$ | 4-$CH_3$-CO | $OC_2H_5$ | $C_2H_5$ | S | $n_D^{23}$: 1,5658 |
| 3 | H | $CH_3$ | 4-$CH_3$-CO | $OC_2H_5$ | $C_2H_5$ | O | $n_D^{23}$: 1,5439 |
| 4 | H | $CH_3$ | 4-$CH_3$-CO | $NHC_3H_7$(i) | $C_2H_5$ | O | $n_D^{24}$: 1,5479 |
| 5 | H | $C_2H_5$ | 4-$CH_3$-CO | $CH_3$ | $C_2H_5$ | S | $n_D^{19}$: 1,5801 |
| 6 | H | $C_2H_5$ | 4-$CH_3$-CO | $OC_2H_5$ | $C_2H_5$ | S | Fp.: 37°C |
| 7 | H | $C_2H_5$ | 4-$CH_3$-CO | $OC_2H_5$ | $C_2H_5$ | O | $n_D^{19}$: 1,5404 |
| 8 | H | $C_2H_5$ | 4-$CH_3$-CO | $NHC_3H_7$(i) | $C_2H_5$ | O | $n_D^{19}$: 1,5426 |
| 9 | H | $CH_3$ | 3-$CH_3$-CO | $CH_3$ | $C_2H_5$ | S | $n_D^{23}$: 1,5844 |
| 10 | H | $CH_3$ | 3-$CH_3$-CO | $OC_2H_5$ | $C_2H_5$ | S | $n_D^{23}$: 1,5621 |
| 11 | H | $CH_3$ | 3-$CH_3$-CO | $OC_2H_5$ | $C_2H_5$ | O | $n_D^{23}$: 1,5391 |
| 12 | H | $CH_3$ | 3-$CH_3$-CO | $NHC_3H_7$(i) | $C_2H_5$ | O | Fp. 94-95°C |

Forts. Tabelle

| Bsp. | $(R)_n$ | $R^1$ | $CO-R^2$ | $R^3$ | $R^4$ | X | $n_D$ bzw. Fp. |
|---|---|---|---|---|---|---|---|
| 13 | H | $CH_3$ | $2-CH_3-CO$ | $CH_3$ | $C_2H_5$ | S | $n_D^{24}$: 1,5824 |
| 14 | H | $CH_3$ | $2-CH_3-CO$ | $OC_2H_5$ | $C_2H_5$ | S | Fp. 50-52°C |
| 15 | H | $CH_3$ | $2-CH_3-CO$ | $OC_2H_5$ | $C_2H_5$ | O | $n_D^{24}$: 1,5348 |
| 16 | H | $CH_3$ | $2-CH_3-CO$ | $NHC_3H_7(i)$ | $C_2H_5$ | O | $n_D^{24}$: 1,5435 |
| 17 | 4-Cl | $CH_3$ | $2-CO-C_6H_5$ | $CH_3$ | $C_2H_5$ | S | $n_D^{24}$: 1,6199 |
| 18 | 4-Cl | $CH_3$ | $2-CO-C_6H_5$ | $OC_2H_5$ | $C_2H_5$ | S | $n_D^{24}$: 1,5979 |
| 19 | 4-Cl | $CH_3$ | $2-CO-C_6H_5$ | $OC_2H_5$ | $C_2H_5$ | O | $n_D^{26}$: 1,5740 |
| 20 | 4-Cl | $CH_3$ | $2-CO-C_6H_5$ | $NHC_3H_7(i)$ | $C_2H_5$ | O | $n_D^{26}$: 1,5839 |
| 21 | H | $CH_3$ | $2-CO-OCH_3$ | $NHC_3H_7(i)$ | $C_2H_5$ | O | $n_D^{20}$: 1,5380 |
| 22 | H | $CH_3$ | $2-CO-OCH_3$ | $OC_2H_5$ | $C_2H_5$ | S | Fp. 49-50°C |
| 23 | H | $CH_3$ | $2-CO-CCH_3$ | $NHC_3H_7(i)$ | $CH_3$ | O | $n_D^{24}$: 1.5419 |
| 24 | H | $CH_3$ | $2-CO-OCH_3$ | $N(CH_3)_2$ | $C_2H_5$ | O | $n_D^{23}$: 1.5333 |
| 25 | H | $CH_3$ | $2-CO-CCH_3$ | $NHCH_3$ | $C_2H_5$ | O | $n_D^{27}$: 1.5400 |
| 26 | H | $CH_3$ | $2-CO-OCH_3$ | $NHC_2H_5$ | $C_2H_5$ | O | $n_D^{27}$: 1.5335 |
| 27 | H | $CH_3$ | $2-CO-OCH_3$ | $CH_3$ | $C_2H_5$ | S | $n_D^{27}$: 1.5692 |
| 28 | H | $CH_3$ | $2-CO-OCH_3$ | $CH_3$ | $CH_3$ | S | $n_D^{27}$: 1.5593 |

Forts. Tabelle

| Bsp. | $(R)_n$ | $R^1$ | $CO-R^2$ | $R^3$ | $R^4$ | X | $n_D$ bzw. Fp. |
|---|---|---|---|---|---|---|---|
| 29 | H | $CH_3$ | $2-CO-OC_2H_5$ | $NHC_3H_7$ (i) | $C_2H_5$ | O | $n_D^{25}$: 1.5339 |
| 30 | H | $CH_3$ | $2-CO-OC_2H_5$ | $NHC_3H_7$ (i) | $CH_3$ | O | $n_D^{24}$: 1.5359 |
| 31 | H | $CH_3$ | $2-CO-OC_2H_5$ | $OC_2H_5$ | $C_2H_5$ | S | Fp. 62-63°C |
| 32 | H | $CH_3$ | $2-CO-OC_3H_7$ | $NHC_3H_7$ (i) | $C_2H_5$ | O | $n_D^{24}$: 1,5270 |
| 33 | H | $CH_3$ | $2-CO-OC_3H_7$(i) | $OC_2H_5$ | $C_2H_5$ | O | $n_D^{26}$: 1.5241 |
| 34 | H | $CH_3$ | $2-CO-OC_4H_9$ | $NHC_3H_7$ (i) | $C_2H_5$ | O | $n_D^{24}$: 1.5240 |
| 35 | H | $C_2H_5$ | $2-CO-OCH_3$ | $NHCH_3$ | $C_2H_5$ | O | $n_D^{21}$: 1.5375 |
| 36 | H | $C_2H_5$ | $2-CO-OCH_3$ | $NHC_3H_7$ (i) | $C_2H_5$ | O | Oel |
| 37 | H | $C_2H_5$ | $2-CO-OCH_3$ | $OC_2H_5$ | $C_2H_5$ | O | Oel |
| 38 | H | $C_2H_5$ | $2-CO-OCH_3$ | $OC_2H_5$ | $C_2H_5$ | S | Oel |
| 39 | H | $C_2H_5$ | $2-CO-OC_2H_5$ | $NHCH_3$ | $C_2H_5$ | O | $n_D^{23}$: 1,5323 |
| 40 | H | $C_2H_5$ | $2-CO-OC_2H_5$ | $NHC_3H_7$ (i) | $C_2H_5$ | O | $n_D^{22}$: 1,5330 |
| 41 | H | $C_2H_5$ | $2-CO-OC_2H_5$ | $OC_2H_5$ | $C_2H_5$ | O | Oel |
| 42 | H | $C_2H_5$ | $2-CO-OC_2H_5$ | $OC_2H_5$ | $C_2H_5$ | S | $n_D^{22}$: 1,5437 |

Forts. Tabelle

| Bsp. | $(R)_n$ | $R^1$ | $CO-R^2$ | $R^3$ | $R^4$ | X | $n_D$ bzw. Fp. |
|---|---|---|---|---|---|---|---|
| 43 | H | $CH_3$ | $2-CO-NHCH_3$ | $NHC_3H_7(i)$ | $C_2H_5$ | O | Oel |
| 44 | H | $CH_3$ | $2-CO-N(CH_3)_2$ | $NHC_3H_7(i)$ | $C_2H_5$ | O | $n_D^{23}$: 1,539 |
| 45 | H | $CH_3$ | $2-CO-N(CH_3)_2$ | $CH_3$ | $C_2H_5$ | S | Fp. 80-82°C |
| 46 | H | $CH_3$ | $2-CO-N(CH_3)_2$ | $OC_2H_5$ | $C_2H_5$ | S | Fp. 84-86°C |
| 47 | H | $CH_3$ | $2-CO-NHC_3H_7(i)$ | $NHC_3H_7(i)$ | $C_2H_5$ | O | Fp. 135-139°C |
| 48 | H | $CH_3$ | $2-CO-SCH_3$ | $NHCH_3$ | $C_2H_5$ | O | $n_D^{23}$: 1,567 |
| 49 | H | $CH_3$ | $2-CO-SCH_3$ | $N(CH_3)_2$ | $C_2H_5$ | O | $n_D^{24}$: 1,566 |
| 50 | H | $CH_3$ | $2-CO-SCH_3$ | $NHC_3H_7(i)$ | $CH_3$ | O | Fp. 74-77°C |
| 51 | H | $CH_3$ | $2-CO-SC_2H_5$ | $NHCH_3$ | $C_2H_5$ | O | $n_D^{23}$: 1,561 |
| 52 | H | $CH_3$ | $2-CO-SC_2H_5$ | $NHC_2H_5$ | $C_2H_5$ | O | $n_D^{23}$: 1,5570 |
| 53 | H | $CH_3$ | $2-CO-SC_2H_5$ | $N(CH_3)_2$ | $C_2H_5$ | O | $n_D^{20}$: 1,560 |
| 54 | H | $CH_3$ | $2-CO-SC_2H_5$ | $NHC_3H_7(i)$ | $C_2H_5$ | O | $n_D^{22}$: 1,552 |
| 55 | H | $CH_3$ | $2-CO-SC_2H_5$ | $OC_2H_5$ | $C_2H_5$ | S | Oel |

Forts. Tabelle

| Bsp. | $(R)_n$ | $R^1$ | $CO-R^2$ | $R^3$ | $R^4$ | X | $n_D$ bzw. Fp. |
|---|---|---|---|---|---|---|---|
| 56 | 4-Cl | $CH_3$ | $2-CO-OCH_3$ | $NHCH_3$ | $C_2H_5$ | O | $n_D^{22}$: 1,545 |
| 57 | 4-Cl | $CH_3$ | $2-CO-OCH_3$ | $N(CH_3)_2$ | $C_2H_5$ | O | $n_D^{23}$: 1,5475 |
| 58 | 4-Cl | $CH_3$ | $2-CO-OCH_3$ | $NHC_3H_7(i)$ | $C_2H_5$ | O | $n_D^{25}$: 1,536 |
| 59 | 4-Cl | $CH_3$ | $2-CO-OCH_3$ | $OC_2H_5$ | $C_2H_5$ | S | $n_D^{23}$: 1,562 |
| 60 | 4-Cl | $C_2H_5$ | $2-CO-OC_2H_5$ | $NHCH_3$ | $C_2H_5$ | O | $n_D^{25}$: 1,539 |
| 61 | 4-Cl | $C_2H_5$ | $2-CO-OC_2H_5$ | $NHC_3H_7(i)$ | $C_2H_5$ | O | $n_D^{25}$: 1,532 |
| 62 | H | $CH_3$ | $2-CO-SCH_3$ | $OC_2H_5$ | $C_2H_5$ | S | Fp. 51°C |
| 63 | H | $CH_3$ | $2-CO-SCH_3$ | CH3 | $C_2H_5$ | S | $n_D^{22}$: 1,596 |
| 64 | H | $-CH_2COOCH_3$ | $2-CO-OCH_3$ | $NHCH_3$ | $C_2H_5$ | O | $n_D^{30}$: 1,5297 |
| 65 | H | $-CH_2COOCH_3$ | $2-CO-OCH_3$ | $OC_2H_5$ | $C_2H_5$ | O | $n_D^{30}$: 1,5198 |
| 66 | H | $-CH_2COOCH_3$ | $2-CO-OCH_3$ | $NHC_2H_5$ | $C_2H_5$ | O | $n_D^{30}$: 1,5259 |
| 67 | H | $-CH_2COOCH_3$ | $2-CO-OCH_3$ | $N(CH_3)_2$ | $C_2H_5$ | O | $n_D^{30}$: 1,5296 |
| 68 | H | $-CH_2COOCH_3$ | $2-CO-OCH_3$ | $OC_2H_5$ | $C_2H_5$ | S | $n_D^{30}$: 1,5404 |

Forts. Tabelle

| Bsp. | $(R)_n$ | $R^1$ | $CO-R^2$ | $R^3$ | $R^4$ | X | $n_D$ bzw. Fp. |
|---|---|---|---|---|---|---|---|
| 69 | H | $-CH(CH_3)COOC_2H_5$ | $2-CO-OCH_3$ | $NHC_3H_7(i)$ | $C_2H_5$ | O | $n_D^{30}$: 1,5256 |
| 70 | H | $-CH(CH_3)COOC_2H_5$ | $2-CO-OCH_3$ | $OC_2H_5$ | $C_2H_5$ | S | $n_D^{30}$: 1,5341 |
| 71 | H | $-CH(CH_3)COOC_2H_5$ | $2-CO-OCH_3$ | $NHCH_3$ | $C_2H_5$ | O | $n_D^{30}$: 1,5258 |
| 72 | H | $-CH_2-COOC_2H_5$ | $2-CO-OC_2H_5$ | $NHC_3H_7(i)$ | $C_2H_5$ | O | $n_D^{23}$: 1,5099 |
| 73 | H | $-CH_2-COOC_2H_5$ | $2-CO-OC_2H_5$ | $NHCH_3$ | $C_2H_5$ | O | $n_D^{23}$: 1,5214 |
| 74 | H | $-CH_2-COOC_2H_5$ | $2-CO-OC_2H_5$ | $NHC_3H_7(i)$ | $CH_3$ | O | $n_D^{23}$: 1,5200 |
| 75 | H | $-CH_2-COOC_2H_5$ | $2-CO-OC_2H_5$ | $OC_2H_5$ | $C_2H_5$ | S | $n_D^{23}$: 1,5338 |
| 76 | H | $C_6H_5$ | $2-CO-OCH_3$ | $NHCH_3$ | $C_2H_5$ | O | $n_D^{22}$: 1,5600 |
| 77 | H | $C_6H_5$ | $2-CO-OCH_3$ | $NHC_3H_7(i)$ | $C_2H_5$ | O | $n_D^{22}$: 1,5603 |
| 78 | H | $C_6H_5$ | $2-CO-OCH_3$ | $OC_2H_5$ | $C_2H_5$ | S | Oel |
| 79 | H | $CH_3$ | $4-CO-OCH_3$ | $OC_2H_5$ | $C_2H_5$ | S | $n_D^{27}$: 1,5620 |
| 80 | H | $CH_3$ | $4-CO-OC_2H_5$ | $OC_2H_5$ | $C_2H_5$ | S | $n_D^{24}$: 1,557 |
| 81 | H | $CH_3$ | $4-CO-OCH_3$ | $OC_2H_5$ | $C_2H_5$ | O | $n^{24}$: 1,541 |

Forts. Tabelle

| Bsp. | $(R)_n$ | $R^1$ | $CO-R^2$ | $R^3$ | $R^4$ | X | $n_D$ bzw. Fp. |
|---|---|---|---|---|---|---|---|
| 82 | H | $CH_3$ | $4-CO-OC_2H_5$ | $NHC_3H_7(i)$ | $CH_3$ | O | $n_D^{23}$: 1,543 |
| 83 | H | $CH_3$ | $4-CO-OCH_3$ | $NHCH_3$ | $C_2H_5$ | O | $n_D^{22}$: 1,552 |
| 84 | H | $CH_3$ | $4-CO-OC_2H_5$ | $NHCH_3$ | $C_2H_5$ | O | $n_D^{23}$: 1,5431 |
| 85 | H | $CH_3$ | $4-CO-OC_2H_5$ | $NHC_3H_7(i)$ | $C_2H_5$ | O | $n_D^{24}$: 1,5395 |
| 86 | H | $CH_3$ | $4-CO-OCH_3$ | $NHC_3H_7(i)$ | $CH_3$ | O | $n_D^{23}$: 1,547 |
| 87 | H | $CH_3$ | $4-CO-OCH_3$ | $NHC_2H_5$ | $C_2H_5$ | O | $n_D^{22}$: 1,549 |
| 88 | H | $CH_3$ | $4-CO-OC_2H_5$ | $NHC_2H_5$ | $C_2H_5$ | O | $n_D^{23}$: 1,542 |
| 89 | H | $CH_3$ | $4-CO-OCH_3$ | $NHC_3H_7(i)$ | $C_2H_5$ | O | $n_D^{27}$: 1,5498 |

## BIOLOGISCHE BEISPIELE

### Beispiel I

Mit Bohnenspinnmilben (Tetranychus urticae, normal sensibel) stark befallene Bohnenpflanzen (Phaseolus vulgaris) wurden mit der wäßrigen Verdünnung eines 0,025 Gew.-%igen Emulsionskonzentrates bis zum Stadium des beginnenden Abtropfens gespritzt. Die Mortalität der Milben wurde nach 8 Tagen kontrolliert.

100 % Abtötung wurde mit den Verbindungen gemäß Beispiel 13, 15, 21, 22, 23, 25 - 30, 36, 38, 40, 42, 43, 58, 59, 61 und 63 erzielt.

### Beispiel II

Mit Obstbaumspinnmilben (Metatetranychus ulmi) stark befallene Apfelbäumchen (Malus communis) wurden wie im Beispiel I behandelt. Die Mortalität der Milben wurde nach 8 Tagen kontrolliert.

100 % Abtötung wurde mit den Verbindungen gemäß Beispiel 19, 21, 22, 23, 25 - 30, 35 - 43, 45, 46, 56, 58, 59, 65, 66 und 69 erzielt.

### Beispiel III

Mit Kundebohnenblattläusen (Aphis craccivora) stark besetzte Ackerbohnen (Vicia faba) wurden wie im Beispiel I mit einer 0,0125 Gew.-%igen wäßrigen Emulsion bis zum Stadium des beginnenden Abtropfens gespritzt. Die Mortalität der Blattläuse wurde nach 3 Tagen bestimmt.

Eine 100 % Abtötung konnte mit den Verbindungen gemäß Beispiel 13, 14, 15, 21, 22, 23, 25 - 30, 33, 35 - 38, 43, 56, 58 und 63 erzielt werden.

Beispiel IV

Als Wirkstoff wurden die Verbindungen der Beispiele 27, 28, 38, 42, 59, 70 und 86 in Aceton gelöst. Anschließend wurden je 1 ml einer 0,025 Gew.-%igen acetonischen Lösung auf der Innenseite des Deckels und des Bodens von Petrischalen gleichmäßig verteilt. Nach dem Abtrocknen wurden in jede Schale 10 Deutsche Schaben (Blatella germanica) gesetzt und nach 3 Stunden jeweils 100 % Mortalität festgestellt.

Beispiel V

Larven des Mexikanischen Bohnenkäfers (Epilachna varivestis-LIV) und Blätter der Buschbohne (Phaseolus vulgaris) wurden mit einer Spritzapparatur mit dosierten Mengen der jeweils 0,05 Gew.-%igen wäßrigen Verdünnung von Emulsionskonzentraten gespritzt. Die Mortalität wurde 48 Stunden nach der Behandlung kontrolliert.

100 % Abtötung wurde mit den Verbindungen gemäß Beispiel 13, 14, 15, 17, 18, 21, 22, 23, 25, 27, 28, 37, 38, 39, 41, 42, 43, 54, 55, 59, 63, 66, 68 und 70 erzielt.

Beispiel VI

Eine staubförmige Formulierung wurde mit Erde gemischt, die mit Meloidogyne incognita verseucht war. Anschließend erfolgte das Abfüllen in Töpfe und die Bepflanzung dieser mit Tomaten.

Bei einer eingemischten Wirkstoffmenge, die einer Aufwandmenge von 20 kg Wirkstoff/ha entspricht, erreichten die Verbindungen gemäß Beispiel 12, 13, 16, 21 - 27, 29, 30, 33, 35, 36, 39, 40, 54, 58 und 61, nach einer Standzeit von 4 Wochen 100 % Wirksamkeit.

Patentansprüche:

1. Verbindungen der Formel I, worin

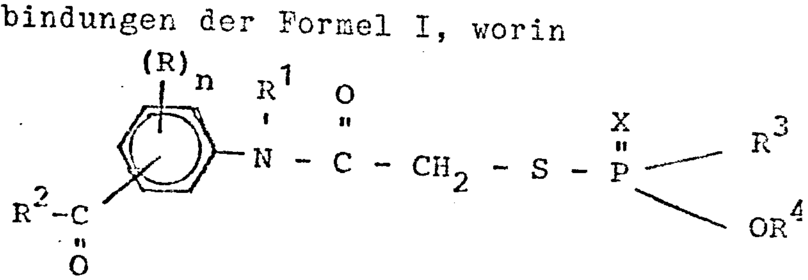

(I)

R = Halogen, $NO_2$, $(C_1-C_4)$-Alkyl,
R1 = $(C_1-C_4)$-Alkyl, wobei in Position C-1 des Alkylrestes ein $(C_1-C_4)$-Alkoxycarbonylrest stehen kann, oder Phenyl,
R2 = $(C_1-C_4)$-Alkyl, $(C_1-C_4)$-Alkoxy, $(C_1-C_4)$-Alkylthio, Phenyl, Amino, $(C_1-C_6)$-Monoalkylamino- oder $(C_1-C_6)$-Dialkylamino
R3 = $(C_1-C_4)$-Alkyl, $(C_1-C_4)$-Alkoxy, $(C_1-C_4)$-Alkylthio, $(C_1-C_4)$-Monoalkylamino oder $(C_1-C_4)$-Dialkylamino
R4 = $(C_1-C_4)$-Alkyl
X = O, S und
n = 0 oder 1

bedeuten, wobei R nicht orthoständig zur Gruppe -NR1- stehen darf.

2. Verbindungen der Formel I, worin
$R^1$ = $(C_1-C_2)$-Alkyl,
$R^2$ = $(C_1-C_2)$-Alkyl oder $(C_1-C_2)$-Alkoxy,
$R^3$ = Mono- oder Di-$(C_1-C_4)$-alkyl-amino,
$R^4$ = $(C_1-C_2)$-Alkyl,
X = O und
n = 0 bedeuten,

und die Gruppe $R^2$-CO sich in ortho-Position des Phenylringes befindet.

3. Verfahren zur Herstellung von Verbindungen der Formel I, dadurch gekennzeichnet, daß man Verbindungen der Formel II

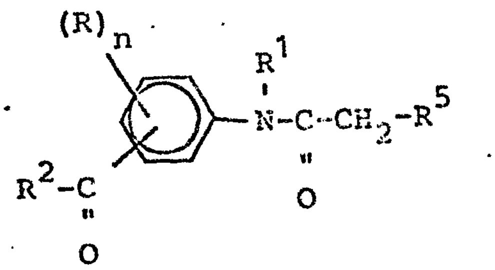

(II)

mit Phosphorverbindungen der Formel III,

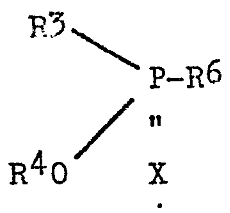

III

wobei bei den Formeln II und III jeweils einer der Reste R5 und R6 Halogen und der andere die Gruppe -SY bedeutet, worin Y Wasserstoff oder ein Kation darstellt, gegebenenfalls in Gegenwart eines säurebindenden Mittels umsetzt.

4. Insektizide, akarizide und nematizide Mittel, gekennzeichnet durch einen wirksamen Gehalt an einer Verbindung der Formel I gemäß Ansprüchen 1 oder 2.

5. Verwendung von Verbindungen der Formel I im Pflanzenschutz.

6. Verfahren zur Bekämpfung von Schadinsekten, Akariden und Nematoden, dadurch gekennzeichnet, daß man auf diese, die von ihnen befallenen Pflanzen oder deren Anbauflächen eine wirksame Menge einer Verbindung der Formel I gemäß Ansprüchen 1 oder 2 aufbringt.

7. Verbindung der Formel

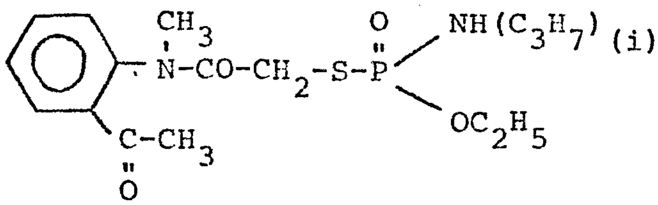

8. Verbindung der Formel

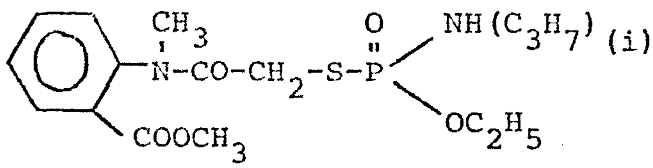

9. Verbindung der Formel

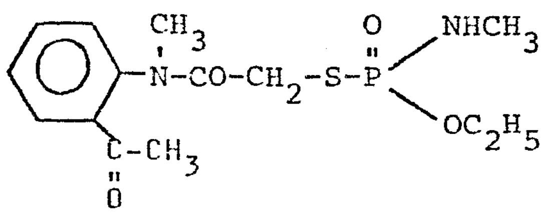

Patentansprüche für Österreich:

1. Verfahren zur Herstellung von Verbindungen der Formel I, worin

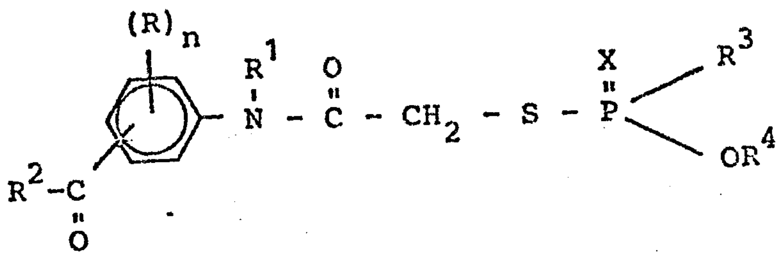

(I)

R = Halogen, $NO_2$, $(C_1-C_4)$-Alkyl,
R1 = $(C_1-C_4)$-Alkyl, wobei in Position C-1 des Alkylrestes ein $(C_1-C_4)$-Alkoxycarbonylrest stehen kann, oder Phenyl,
R2 = $(C_1-C_4)$-Alkyl, $(C_1-C_4)$-Alkoxy, $(C_1-C_4)$-Alkylthio, Phenyl, Amino, $(C_1-C_6)$-Monoalkylamino- oder $(C_1-C_6)$-Dialkylamino
R3 = $(C_1-C_4)$-Alkyl, $(C_1-C_4)$-Alkoxy, $(C_1-C_4)$-Alkylthio, $(C_1-C_4)$-Monoalkylamino oder $(C_1-C_4)$-Dialkylamino
R4 = $(C_1-C_4)$-Alkyl
X = O, S und
n = 0 oder 1

bedeuten, wobei R nicht orthoständig zur Gruppe $-NR^1-$ stehen darf, dadurch gekennzeichnet, daß man Verbindungen der Formel II

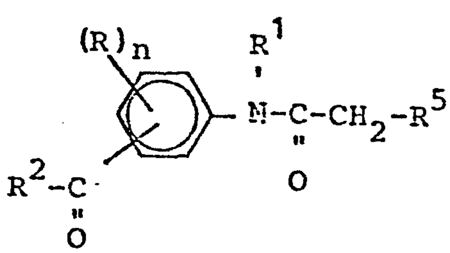

(II)

mit Phosphorverbindungen der Formel III,

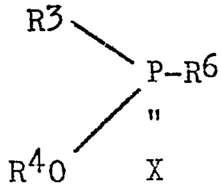

III

wobei bei den Formeln II und III jeweils einer der Reste $R^5$ und $R^6$ Halogen und der andere die Gruppe -SY bedeutet, worin Y Wasserstoff oder ein Kation darstellt, gegebenenfalls in Gegenwart eines säurebindenden Mittels umsetzt.

2. Schädlingsbekämpfungsmittel, gekennzeichnet durch einen wirksamen Gehalt an einer Verbindung der Formel I von Anspruch 1.

3. Verwendung von Verbindungen der Formel I von Anspruch 1 im Pflanzenschutz.

4. Verfahren zur Bekämpfung von Schadinsekten, Akariden und Nematoden, dadurch gekennzeichnet, daß man auf diese, die von ihnen befallenen Pflanzen oder deren Anbauflächen eine wirksame Menge einer Verbindung der Formel I von Anspruch 1 aufbringt.